# FASCICULE DE BREVET EUROPEEN

(11) **EP 0 855 290 B1**
(45) Date de publication et mention de la délivrance du brevet: **17.04.2002**
(21) Numéro de dépôt: 98100002.9
(22) Date de dépôt: 02.01.1998
(51) Int. Cl.: B60C 11/00, B60C 11/12, B60C 11/24, B29D 30/68

(54) **Bande de roulement à rainures recreusables**
Luftreifenlauffläche mit erneuerbaren Nuten
Tire tread with regroovable slits

(30) Priorité: 24.01.1997 FR 9700865
(43) Date de publication de la demande: 29.07.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Auxerre, Pascal, 63130 Royat (FR); Garnier de Labareyre, Bertrand, 63400 Chamalieres (FR)
(74) Mandataire: Devaux, Edmond-Yves

(56) Documents cités:
- EP-A- 0 479 028
- EP-A- 0 505 178
- AT-A- 336 415
- DE-A- 2 347 021
- PATENT ABSTRACTS OF JAPAN vol. 010, no. 193 (M-496), 8 juillet 1986 & JP 61 037504 A (YOKOHAMA RUBBER CO LTD:THE), 22 février 1986,

## Description

L'invention concerne un pneumatique "Poids-Lourds", et plus particulièrement la bande de roulement d'un tel pneumatique, quelles que soient les caractéristiques d'une telle bande de roulement.

Dans la très grande majorité des cas, les sculptures de bandes de roulement pour pneumatique "Poids-Lourds" sont pourvues de rainures circonférentielles, rectilignes, en zigzag ou ondulées, lesdites rainures pouvant être réunies par des rainures et/ou incisions transversales. Lesdites rainures circonférentielles comportent généralement des témoins d'usure, petites plates-formes de caoutchouc couvrant sur une certaine longueur circonférentielle le fond des rainures, ledit témoin indiquant la profondeur de sculpture minimale qui doit légalement rester sur la bande de roulement en utilisation. Les sculptures pour véhicules "Poids-Lourds" sont recreusables, et les pneumatiques ayant de telles sculptures portent sur leurs flancs la mention "Regroovable" ou le symbole "U". Le recreusage permet d'une part de prolonger le potentiel d'adhérence du pneumatique "Poids-Lourds" et d'autre part d'accroître de façon importante le rendement kilométrique : de 15 à 30% selon les cas et cela sans pénaliser la possibilité de rechapage, qui est par ailleurs une caractéristique essentielle d'un pneumatique "Poids-Lourds". Il faut ajouter que le recreusage permet également une économie de carburant, le pneumatique présentant une résistance au roulement plus faible, du fait de l'épaisseur de bande de roulement réduite.

Comme connu en soi, le recreusage d'une rainure s'effectue à l'aide d'une lame arrondie chauffante, manipulée par un opérateur. Ladite lame, reliée à un bâti qui prend appui sur la surface de bande de roulement, peut être maniée manuellement de façon à suivre assez fidèlement le tracé de la rainure sur la surface de la bande de roulement, même dans le cas de rainure à tracé non rectiligne. Cette opération de recreusage demande cependant un certain nombre de précautions. La première consiste à effectuer ladite opération lorsqu'il reste environ 2 mm de profondeur de rainure, ladite profondeur étant mesurée entre la surface de bande de roulement et la surface radialement extérieure des témoins d'usure placés en fond de rainure. Cette précaution permet une bonne visualisation du dessin de sculpture et ainsi de le reproduire sans difficulté majeure. Connaissant la profondeur de sculpture restante et la profondeur de recreusage préconisée par le manufacturier de pneumatiques, il est alors possible d'ajuster, de régler la hauteur de la lame de recreusage.

Les profondeurs de recreusage généralement indiquées sont des profondeurs théoriques. Si elles sont, dans une majorité de cas satisfaisantes, et permettent de régler théoriquement la hauteur de lame pour conserver approximativement une certaine épaisseur de gomme entre le fond de rainure recreusée et la face radialement supérieure de l'armature de sommet, les risques d'un recreusage trop profond ne sont pas exclus. Or un recreusage trop poussé peut entraîner des dommages provoquant la destruction prématurée de l'enveloppe de pneumatique. Il peut aussi compromettre la possibilité d'un rechapage économique, c'est-à-dire un rechapage où seule la bande de roulement est changée. Il peut aussi, dans certains cas extrêmes, laisser apparaître, en fonds de sculpture recreusée, les nappes de l'armature de sommet radialement sous-jacente, ce qui n'est pas admis de manière générale par les législations en vigueur.

L'invention se propose de permettre la réalisation d'un recreusage respectant précisément la présence d'une épaisseur de caoutchouc, au-dessus de la face radialement supérieure de l'armature de sommet, minimale et fixée par le manufacturier de pneumatiques, tout en permettant d'accroître au maximum le rendement kilométrique du pneumatique.

Aussi le pneumatique, conforme à l'invention, comprenant une armature de carcasse radiale surmontée radialement d'une armature de sommet formée d'au moins une nappe d'éléments de renforcement, et une bande de roulement pourvue de rainures pouvant être recreusées, est caractérisé en ce que les parties de bande de roulement disposées radialement sous les rainures recreusables sont munies d'indicateurs de profondeur, chaque indicateur comprenant au moins un moyen indiquant la profondeur minimale à atteindre pour un recreusage efficace et la profondeur maximale ne devant en aucun cas être dépassée.

Les indicateurs de profondeur peuvent se présenter sous deux formes préférentielles. Selon une première variante, l'indicateur est une incision de faible largeur non nulle placée en fond de rainure soit parallèle à la direction de la dite rainure, soit perpendiculaire à ladite direction, soit les deux simultanément, le moyen indiquant les profondeurs minimale et maximale étant alors la forme géométrique du fond de l'incision indicatrice de profondeur. Selon une deuxième variante, l'indicateur de profondeur est l'ensemble de deux couches de caoutchouc disposées dans la partie de bande de roulement localisée radialement sous le fond de rainure, les couches étant différentes entre elles et différentes de la bande de roulement par les caractéristiques des mélanges de caoutchouc qui les composent, caractéristiques reconnaissables aisément par le spécialiste ou professionnel du recreusage de bande de roulement. Ces caractéristiques peuvent être des caractéristiques d'aspect telles que de couleur, de brillance, ou des caractéristiques plus techniques telles que de dureté par exemple.

Le recreusage correct d'une rainure circonférentielle demande un nombre d'indicateurs de profondeur suffisant sur la circonférence du fond de rainure concernée, afin que l'opérateur effectuant ledit recreusage puisse agir rapidement si nécessaire. La périodicité des indicateurs peut être comprise entre 30 et 100 mm.

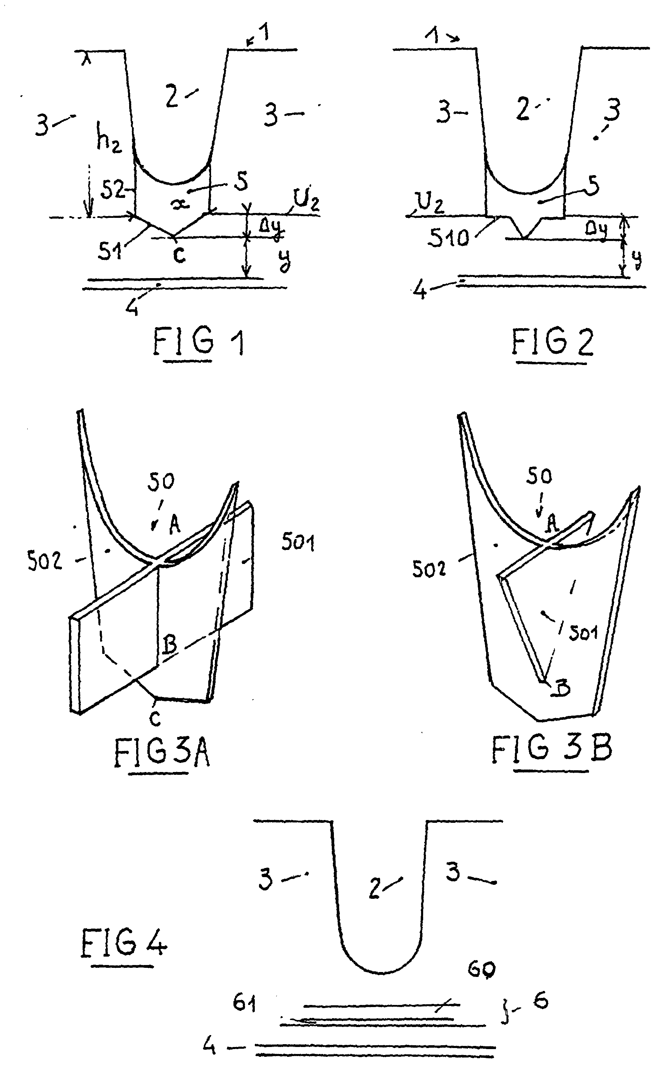

Les caractéristiques et avantages de l'invention seront mieux comprises à l'aide de la description qui suit et qui se réfère au dessin illustrant à titre non limitatif des exemples d'exécution, dessin sur lequel :
. la figure 1 représente schématiquement, vue en section méridienne une rainure circonférentielle, pourvue d'une incision indicatrice de profondeur,
. la figure 2 représente de la même manière une rainure circonférentielle avec une variante d'incision indicatrice,
. les figures 3A et 3B représentent schématiquement, vues en perspective, des variantes de lamelles métalliques destinées à la réalisation d'incisions dites à deux branches,
. la figure 4 représente, vue en section méridienne, une solution avec couches de caoutchouc,

Sur la figure 1, la rainure circonférentielle (2) est délimitée axialement par deux nervures (3), axialement adjacentes, de la bande de roulement (1) d'un pneumatique "Poids-Lourds". La rainure (2) est munie en son fond d'incisions (5) réparties sur toute la circonférence dudit fond Une incision (5), indicatrice de profondeur, plane dans l'exemple décrit, possède un fond d'incision (51) ayant une forme géométrique telle que la distance x entre les deux parois quasi-verticales (52) de l'incision (5), ou longueur x de l'incision, diminue fortement jusqu'à devenir nulle pour une certaine distance radiale Δy, mesurée entre l'extrémité radialement intérieure C du fond (51) d'incision et la ligne axiale U₂ des points d'intersection de la forme géométrique du fond avec les parois (52) de l'incision. La distance radiale Δy est égale à 1 mm, alors que la distance y, séparant le point C de la surface radialement extérieure de l'armature de sommet (4), est de 1,5 mm. La ligne U₂ est la ligne axiale de profondeur h₂ minimale, mesurée par rapport à la surface de la bande de roulement, qu'il faut atteindre lors de l'opération de recreusage, pour que ce dernier soit efficace, c'est-à-dire qu'il permette le rendement kilométrique maximal. Jusqu'à la ligne U₂, le recreusage permet la visualisation en fond de recreusage de la trace d'une incision (5) de longueur sensiblement égale à x. Un recreusage plus profond, c'est-à-dire lorsque la zone de hauteur y est atteinte par la lame de recreusage, fait apparaître une trace d'incision (5) de longueur inférieure à x, alors qu'un recreusage encore plus profond peut atteindre le point C, où n'apparaît alors qu'une trace ponctuelle, le point C indiquant la limite de profondeur h₂ + Δy à ne pas dépasser.

La variante montrée sur la figure 2 représente une forme géométrique de fond (51) d'incision (5) permettant une visualisation plus aisée de la longueur d'incision, en ce sens que les segments (510) de fond d'incision, parallèles à la surface de bande de roulement (1) font passer la longueur d'incision x à une longueur nettement plus faible pour une distance radiale pratiquement nulle.

Les incisions (5) décrites ci-dessus sont dites incisions à une branche. Une méthode permettant une visualisation pratiquement parfaite de la profondeur atteinte par la lame de recreusage consiste à utiliser des incisions (5) dites à deux branches, de préférence planes et perpendiculaires entre elles. La lamelle métallique (50), représentée sur la figure 3A, est destinée à la réalisation en fond de rainure d'une incision (5) : elle comporte une branche (502) plane dont la forme correspond à celle de l'incision (5) montrée sur la figure 1, et une branche (501) plane, perpendiculaire à la branche (502) et dont la forme est simplement rectangulaire. La branche (502) est disposée perpendiculairement à la direction générale de la rainure (2) (non montrée sur les figures 3A et 3B pour plus de clarté), alors que la branche (501) est parallèle à ladite direction. La hauteur de ladite branche (501), mesurée entre le point A et le point B, la droite AB étant la droite d'intersection des deux plans de branches, est inférieure à la hauteur de la branche (502), mesurée entre le point A et le point C, ledit point C étant le point du fond de la branche (502) radialement le plus à l'intérieur. Aussi le recreusage correct d'une rainure (2) pourvue d'une incision (5) à deux branches doit avoir une profondeur telle que la trace, sous forme de croix, des deux branches disparaisse, pour se convertir à partir du point B en une seule trace rectiligne, mais une profondeur au plus égale à celle qui permet l'apparition de la seule trace ponctuelle correspondant au point C.

La variante de lamelle métallique (50), montrée sur la figure 3B comporte une branche (501) de forme triangulaire. L'apparition plus progressive, du fait de la diminution progressive de la longueur de la trace de la branche (501), de la seule trace de la branche (502) au point B, permet une visualisation de meilleure qualité.

La figure 4 montre l'utilisation en tant qu'indicateur de profondeur d'un ensemble (6) de deux couches (60) et (61) de caoutchouc. Lesdites deux couches se différencient entre elles par la couleur du caoutchouc qui les compose, la couche (60) indiquant la profondeur minimale à atteindre étant de couleur verte, alors que la couche (61) indique la profondeur maximale permise étant de couleur rouge, les dites couleurs étant par ailleurs différentes de la couleur noire du caoutchouc composant le reste de la bande de roulement (1). Les couches de couleur peuvent être disposées dans la bande de roulement de la manière la plus simple possible par simple pose, sur le profilé de mélange radialement au-dessus de l'armature de sommet, de deux couches minces (60) et (61) recouvrant entièrement ledit profilé et superposées l'une sur l'autre, la couche radialement supérieure étant, par exemple, verte et d'épaisseur égale à 1,5 mm, alors que la couche radialement inférieure est de couleur rouge et d'épaisseur égale à 0,8 mm. Les deux couches (60) et (61) peuvent aussi se présenter sous forme de bandes transversales de mélange caoutchouteux, disposées circonférentiellement à intervalles réguliers.

Chaque rainure (2) d'une bande de roulement (1) peut être pourvue d'incisions (5), et plus particulièrement, dans le cas de pneumatique pour véhicule "Poids-Lourds", les rainures circonférentielles. Il va de soi qu'une même rainure (2) peut être munie d'incisions de nature différente, par exemple d'incisions (5) planes à une seule branche telle que montrée sur la figure 1, séparées entre elles par des incisions à deux branches telles que montrées sur les figures 3A et/ou 3B. Il est tout aussi possible de munir une rainure circonférentielle (2) entièrement d'incisions (5) à une seule branche, certaines étant disposées perpendiculairement à la direction générale de la rainure, d'autres étant disposées parallèlement à ladite direction générale. De manière préférentielle, et pour ne pas trop affecter les rigidités des éléments en relief d'une sculpture, il est avantageux de disposer dans les rainures circonférentielles de largeur normale ou de grande largeur (largeur au moins égale à 5 mm) des incisions (5) à double branche, alors que les rainures dites étroites (largeur au plus égale à 5 mm) seront munies d'incisions à une seule branche, et préférentiellement parallèles à la direction de la rainure.

La méthode de recreusage d'une bande de roulement (1) de pneumatique pour véhicule "Poids-Lourds", conforme à l'invention, consiste, après avoir muni les rainures (2) de la bande de roulement (1) d'incisions indicateurs de profondeurs (5) nécessaires, telles que montrées par exemple sur les figures 3A ou 3B, à :
- ne considérer que les rainures possédant en fond de rainures des incisions soit à une branche soit à deux branches ; ce sont les seules rainures recreusables,
- effectuer un premier réglage de la hauteur de lame ou gouge de recreusage, qui sera la somme de la profondeur théorique à recreuser, selon les recommandations des manufacturiers de pneumatiques, et de la hauteur de sculpture restante à user, cette hauteur étant comprise entre 2 et 3 mm,
- recreuser sur une longueur de rainure d'environ 100 mm, rainure comportant les indicateurs selon l'invention, pour adapter la profondeur réelle de recreusage, aucune trace d'incision dans le sens de la rainure ne devant apparaître, autrement dit la trace d'incision se présentant sous forme de croix devant laisser place à la seule trace dans le sens de la rainure,
- poursuivre le recreusage et vérifier qu'il est correctement réalisé, une trace d'incision perpendiculaire à l'orientation de la rainure devant exister pendant l'opération de recreusage et l'absence de trace signifiant un recreusage hors tolérances.

## Revendications

1. Bande de roulement (1) pour pneumatique de type "Poids-Lourds" à armature de carcasse radiale surmontée radialement d'une armature de sommet (4) formée d'au moins une nappe d'éléments de renforcement, ladite bande de roulement étant pourvue de rainures (2) pouvant être recreusées, **caractérisée en ce que** les parties de bande de roulement disposées radialement sous les rainures (2) sont munies d'indicateurs de profondeur (5), chaque indicateur (5) comprenant au moins un moyen indiquant la profondeur minimale à atteindre pour un recreusage efficace et la profondeur maximale ne devant en aucun cas être dépassée.

2. Bande de roulement selon la revendication 1, **caractérisée en ce que** l'indicateur de profondeur (5) est une incision de faible largeur non nulle placée en fond de rainure soit parallèle à la direction de ladite rainure, soit perpendiculaire à ladite direction, soit les deux simultanément, le moyen indiquant les profondeurs minimale et maximale à respecter étant alors la forme géométrique (51) de l'intersection entre le fond de la rainure recreusée et le fond de l'incision indicatrice de profondeur (5).

3. Bande de roulement selon la revendication 1, **caractérisée en ce que** l'indicateur de profondeur (5) est l'ensemble (6) de deux couches de caoutchouc (60) et (61), disposées dans la partie de bande de roulement localisée radialement sous le fond de rainure, les couches de caoutchouc formant l'indicateur étant différentes du reste de la bande de roulement par les caratéristiques des mélanges de caoutchouc qui les composent.

4. Bande de roulement selon la revendication 2, **caractérisée en ce que** l'incision (5), indicatrice de profondeur, a une seule branche plane avec deux parois quasi verticales (52) et un fond d'incision (51) ayant une forme géométrique telle que la longueur x de l'incision (5) diminue fortement jusqu'à devenir nulle pour une certaine distance radiale Δy, mesurée entre l'extrémité radialement intérieure C du fond (51) d'incision et la ligne axiale U₂ des points d'intersection de la forme géométrique du fond avec les parois quasi-verticales (52) de l'incision (5).

5. Bande de roulement selon la revendication 4, **caractérisée en ce que** le fond (51) d'incision (5) comporte des segments (510) latéraux, parallèles à la surface de bande de roulement (1) permettant le passage de la longueur d'incision x à une longueur nettement plus faible pour une distance radiale pratiquement nulle.

6. Bande de roulement selon la revendication 2, **caractérisée en ce que** l'incision (5), indicatrice de profondeur, possède deux branches planes (501) et (502), perpendiculaires entre elles, une des branches (502) étant disposée perpendiculairement à la direction de la rainure (2), l'autre branche (501) étant disposée parallèlement à ladite direction, ayant une forme plane rectangulaire et dont la hauteur, mesurée sur la droite d'intersection des deux plans contenant les branches (502) et (501), est inférieure à la hauteur de la branche (502), mesurée sur la même droite d'intersection.

7. Bande de roulement selon la revendication 2, **caractérisée en ce que** l'incision (5), indicatrice de profondeur, possède deux branches planes (501) et (502), perpendiculaires entre elles, une des branches (502) étant disposée perpendiculairement à la direction de la rainure (2), l'autre branche (501) étant disposée parallèlement à ladite direction, ayant une forme plane triangulaire et dont la hauteur, mesurée sur la droite d'intersection des deux plans contenant les branches (502) et (501), est inférieure à la hauteur de la branche (502), mesurée sur la même droite d'intersection.

## Claims

1. A tread (1) for a tyre of the "heavy vehicle" type having a radial carcass reinforcement surmounted radially by a crown reinforcement (4) formed of at least one ply of reinforcement elements, said tread being provided with grooves (2) which can be regrooved, **characterised in that** those parts of the tread which are arranged radially beneath the grooves (2) are provided with depth indicators (5), each indicator (5) comprising at least one means indicating the minimum depth to be reached for effective regrooving and the maximum depth which must not be exceeded at any cost.

2. A tread according to Claim 1, **characterised in that** the depth indicator (5) is an incision of low depth other than zero placed at the bottom of a groove which is either parallel to the direction of said groove or perpendicular to said direction, or both simultaneously, the means indicating the minimum and maximum depths to be met then being the geometric form (51) of the intersection between the bottom of the regrooved groove and the bottom of the depth-indicating incision (5).

3. A tread according to Claim 1, **characterised in that** the depth indicator (5) is the set (6) of two layers of rubber (60) and (61) which are arranged **in that** part of the tread located radially beneath the bottom of the groove, the layers of rubber forming the indicator differing from the rest of the tread by the characteristics of the rubber mixes which form them.

4. A tread according to Claim 2, **characterised in that** the depth-indicating incision (5) has a single planar branch with two virtually vertical walls (52) and a bottom (51) of the incision having a geometric form such that the length x of the incision (5) decreases greatly until it becomes zero for a certain radial distance Δy, measured between the radially inner end C of the bottom (51) of the incision and the axial line U₂ of the points of intersection of the geometric form of the bottom with the virtually vertical walls (52) of the incision (5).

5. A tread according to Claim 4, **characterised in that** the bottom (51) of the incision (5) comprises lateral segments (510) parallel to the tread surface (1) permitting the change of the length of incision x to a significantly shorter length for a radial distance of practically zero.

6. A tread according to Claim 2, **characterised in that** the depth-indicating incision (5) has two planar branches (501) and (502) which are perpendicular to each other, one of the branches (502) being arranged perpendicular to the direction of the groove (2), the other branch (501) being arranged parallel to said direction, having a rectangular planar form and the height of which, measured on the straight line of intersection of the two planes containing the branches (502) and (501), is less than the height of the branch (502), measured on the same straight line of intersection.

7. A tread according to Claim 2, **characterised in that** the depth-indicating incision (5) has two planar branches (501) and (502) which are perpendicular to each other, one of the branches (502) being arranged perpendicular to the direction of the groove (2), the other branch (501) being arranged parallel to said direction, having a triangular planar form and the height of which, measured on the straight line of intersection of the two planes containing the branches (502) and (501), is less than the height of the branch (502), measured on the same straight line of intersection.

## Patentansprüche

1. Lauffläche (1) für einen "Schwerlastreifen" mit einer radialen Karkassenbewehrung, radial über der eine Scheitelbewehrung (4) angebracht ist, die aus mindestens einer Lage aus Verstärkungselementen gebildet ist, wobei die genannte Lauffläche mit Rillen (2) versehen ist, die nachgeschnitten werden können, **dadurch gekennzeichnet, daß** die Teile der Lauffläche, die radial unter den Rillen (2) angeordnet sind, mit Tiefenanzeigern (5) versehen sind, wobei jeder Anzeiger (5) mindestens ein Mittel aufweist, das die minimale, für einen wirksamen Nachschnitt zu erreichende Tiefe angibt, und die maximale Tiefe, die in keinem Fall überschritten werden darf.

2. Lauffläche nach Anspruch 1, **dadurch gekennzeichnet, daß** der Tiefenanzeiger (5) ein Einschnitt mit geringer Breite ist, die nicht Null ist, im Boden der Rille angeordnet ist und entweder parallel zur Richtung der Rille, oder senkrecht zur genannten Richtung, oder zu beiden gleichzeitig verläuft, wobei das die zu beachtende, minimale und maximale Tiefe angebende Mittel dann die geometrische Form (51) des Schnitts zwischen dem Boden der nachgeschnittenen Rille und dem Boden des Einschnitts ist, der der Tiefenanzeiger (5) ist.

3. Lauffläche nach Anspruch 1, **dadurch gekennzeichnet, daß** der Tiefenanzeiger (5) eine Anordnung (6) aus zwei Gummischichten (60) und (61) ist, die in dem Teil der Lauffläche angeordnet sind, der unter dem Boden der Rille liegt, wobei die Gummimischungen, die den Anzeiger bilden, vom Rest der Lauffläche durch Merkmale der Gummimischungen verschieden sind, die sie zusammensetzen.

4. Lauffläche nach Anspruch 2, **dadurch gekennzeichnet, daß** der Einschnitt (5), der Tiefenanzeiger ist, einen einzigen, ebenen Schenkel mit zwei gewissermaßen vertikalen Wänden (52) hat und der Boden (51) des Einschnitts eine solche geometrische Form hat, daß die Länge x des Einschnitts (5) sich stark verringert, bis sie Null wird, für einen gewissen, radialen Abstand Δy, gemessen zwischen dem radial inneren Ende C des Bodens (51) des Einschnitts und der axialen Linie U₂ der Schnittpunkte der geometrischen Form des Bodens mit den gewissermaßen vertikalen Wänden (52) des Einschnitts (5).

5. Lauffläche nach Anspruch 4, **dadurch gekennzeichnet, daß** der Boden (51) des Einschnitts (5) seitliche, zur Oberfläche der Lauffläche (1) parallele Segmente (510) aufweist, die den Übergang von der Länge des Einschnitts x zu einer deutlich kürzeren Länge gestatten, und zwar über eine radiale Strecke von praktisch Null.

6. Lauffläche nach Anspruch 2, **dadurch gekennzeichnet, daß** der Einschnitt (5), der Tiefenanzeiger ist, zwei ebene, zueinander senkrechte Schenkel (501) und (502) besitzt, wobei einer der Schenkel (502) senkrecht zur Richtung der Rille (2) angeordnet ist und der andere Schenkel (501) parallel zur genannten Richtung angeordnet ist, eine rechteckige Form hat und dessen Höhe, gemessen über der Schnittgeraden der beiden Ebenen, die die beiden Schenkel (502) und (501) enthalten, kleiner ist als die Höhe des Schenkel (502), gemessen auf derselben Schnittgeraden.

7. Lauffläche nach Anspruch 2, **dadurch gekennzeichnet, daß** der Einschnitt (5), der Tiefenanzeiger ist, zwei ebene, zueinander senkrechte Schenkel (501) und (502) besitzt, wobei einer der Schenkel (502) senkrecht zur Richtung der Rille (2) angeordnet ist und der andere Schenkel (501) parallel zur genannten Richtung angeordnet ist, eine dreieckige Form hat und dessen Höhe, gemessen über der Schnittgeraden der beiden Ebenen, die die beiden Schenkel (502) und (501) enthalten, kleiner ist als die Höhe des Schenkel (502), gemessen auf derselben Schnittgeraden.
